# EUROPEAN PATENT APPLICATION

(11) **EP 1 633 089 A1**
(43) Date of publication of application: **08.03.2006**
(21) Application number: 04745772.6
(22) Date of filing: 10.06.2004
(51) Int. Cl.: H04L 12/56

(54) **ROUTER AND NETWORK CONNECTING METHOD**

(30) Priority: 11.06.2003 JP 2003166998
(71) Applicant: NEC CORPORATION, Minato-ku, Tokyo 108-8001 (JP)
(72) Inventor: SUZUKI, Kazuya, c/o NEC Corporation, Tokyo 1088001 (JP); JIBIKI, Masahiro, c/o NEC Corporation, Tokyo 1088001 (JP)
(74) Representative: Glawe, Delfs, Moll
(86) International application number: PCT/JP2004/008142
(87) International publication number: WO 2004/112327

(57) **Abstract**

An active router and standby routers share routing information used for dynamic routing while in normal operation. Further, the active router and the standby routers share routing information obtained after route computation is performed according to a routing protocol. Thus, efficient operation can be achieved. Protocol engines (31a to 31d) communicate with routers (41 and 42) to compute a route to be selected for routing with respect to a corresponding protocol. When the routing information has changed, a shared routing information transmitter (33) transmits the routing information and the like to the standby routers. Each of the protocol engines in a router operating as an active router communicates with the routers (41 and 42) to compute a route to be selected for routing with respect to a corresponding protocol. When the routing information has changed, a shared routing information receiver (34) receives the routing information and the like transmitted from the protocol engine.

## Description

### TECHNICAL FIELD

The present invention relates to a router and a network connection system, and more particularly, to a router and a network connection system in which one virtual router is formed of an active router and standby routers to connect a plurality of networks by dynamic routing together with adjacent routers.

### BACKGROUND ART

In recent years, communications through Internet Protocols (IP) or the like have been increasingly important, and communications networks are required to have higher reliability to improve social infrastructure.

One technique for upgrading the reliability of a network involves dynamic routing. According to the dynamic routing, among a plurality of routers for connecting networks, a router which has detected the impossibility of communication with an adjacent router caused by a fault etc. informs other routers that a route via the adjacent router is not available to update routing information, thus effecting a switch to a route avoiding the faulty router. Generally, the dynamic routing is applied to large-scale networks for reasons of easy management and the availability of automatic setting of a diversion route at the time of failure.

As a technique for enhancing the reliability of a router for relaying IP may be cited a router redundancy technique in which a plurality of routers configure a virtual router, and, even when a fault occurs in one of them, another router takes over the operation of the faulty router. In systems using the redundancy technique, protocols such as HSRP (Hot Standby Routing Protocol) and VRRP (Virtual Router Redundancy Protocol) are used for router fault detection or handover process.

In Japanese Patent Laid-Open No. 2000-83045 (Patent Document 1), there is described a route control system. In the route control system, respective routers constituting a cluster router share network information collected to create a routing table by using a network information notice packet.
Patent Document 1: Japanese Patent Laid-Open No. 2000-83045

### DISCLOSURE OF THE INVENTION

### PROBLEMS THAT THE INVENTION IS TO SOLVE

However, a network connection system using the conventional dynamic routing requires a considerable amount of time to detect a failure in an adjacent router or update routing information. Therefore, the downtime from the occurrence of a failure to the completion of route switch is not negligible.

Besides, a network connection system using the conventional redundancy technique, when a fault occurs in an active router, the router at fault is switched to a standby router. Consequently, as compared to the aforementioned system using the conventional dynamic routing, the network connection system requires relatively short periods of downtime to recover the routing operation. The network connection system, however, has a problem in that since routing information used by the active router is not passed to the standby router, it takes a considerable amount of time to update the routing information in dynamic routing. Accordingly, communication is interrupted until the updating of the routing information has been completed.

This problem results from the necessity of collecting routing information in dynamic routing after the switch of routers to update the routing information so that the standby router can completely take over the operation of the faulty active router.

In, especially, large-scale networks that need dynamic routing, the router redundancy technique leaves much to be improved to take advantage of less downtime.

Additionally, in the route control system described in Patent Document 1, respective routers constituting a cluster router share network information collected to create a routing table by using a routing protocol as described above. Therefore, on receipt of the network information, the routers need to perform route computation individually, which results in an increase in the amount of information exchanged between the routers.

It is therefore an object of the present invention to provide a router and a network connection system, in which an active router and standby routers share routing information used for dynamic routing while in normal operation, and further share routing information obtained after route computation is performed according to a routing protocol, thus enabling efficient operation.

### MEANS OF SOLVING THE PROBLEMS

In accordance with the first aspect of the present invention, to achieve the object mentioned above, there is provided a router for constituting one virtual router, the virtual router being constituted of an active router and standby routers to connect a plurality of networks by dynamic routing through communication with adjacent routers, the router comprising: a routing information computing means for communicating with other routers to compute a route used for routing with respect to each corresponding routing protocol when the router serves as an active router; a routing information transmitting/receiving means for receiving routing information obtained by the routing information computing means of an active router when the router serves as a standby router, and transmitting routing information obtained by the routing information computing means of the router to standby routers when the router serves as an active router; and a routing table updating means for, when routing information used for routing has changed, updating a routing table containing the routing information for performing dynamic routing by selecting an optimal route with respect to each destination based on routing information obtained by the routing information computing means or received by the routing information transmitting/ receiving means.

In accordance with the second aspect of the present invention, in the router of the first aspect, a lifetime is set for routing information received by the routing information transmitting/ receiving means when the router serves as a standby router, and the routing information is deleted after the lifetime has elapsed from when the router started operating as an active router.

In accordance with the third aspect of the present invention, in the router of the first or second aspect, the routing table updating means includes: a computed routing information storage for storing routing information obtained by the routing information computing means when the router serves as an active router; and a received routing information storage for storing routing information received by the routing information transmitting/ receiving means when the router serves as a standby router; and the routing table updating means updates the routing table by selecting an optimal route with respect to each destination based on routing information stored in the computed routing information storage or the received routing information storage.

In accordance with the fourth aspect of the present invention, the router includes routing protocol-based routing information storages for storing routing information obtained by the routing information computing means or received by the routing information transmitting/receiving means with respect to each corresponding routing protocol.

In accordance with the fifth aspect of the present invention, the lifetime is set with respect to each corresponding routing protocol.

In accordance with the sixth aspect of the present invention, there is provided a network connection system, in which one virtual router is constituted of an active router and standby routers to connect a plurality of networks by dynamic routing through communication with adjacent routers, each router that constitutes the virtual router comprising: a routing information computing means for communicating with other routers to compute a route used for routing with respect to each corresponding routing protocol when the router serves as an active router; a routing information transmitting/ receiving means for receiving routing information obtained by the routing information computing means of an active router when the router serves as a standby router, and transmitting routing information obtained by the routing information computing means of the router to standby routers when the router serves as an active router; and a routing table updating means for, when routing information used for routing has changed, updating a routing table containing the routing information for performing dynamic routing by selecting an optimal route with respect to each destination based on routing information obtained by the routing information computing means or received by the routing information transmitting/ receiving means.

In accordance with the seventh aspect of the present invention, in the router of the sixth aspect, a lifetime is set for routing information received by the routing information transmitting/ receiving means when the router serves as a standby router, and the routing information is deleted after the lifetime has elapsed from when the router started operating as an active router.

In accordance with the eighth aspect of the present invention, in the router of the sixth or seventh aspect, the routing table updating means includes: a computed routing information storage for storing routing information obtained by the routing information computing means when the router serves as an active router; and a received routing information storage for storing routing information received by the routing information transmitting/ receiving means when the router serves as a standby router; and the routing table updating means updates the routing table by selecting an optimal route with respect to each destination based on routing information stored in the computed routing information storage or the received routing information storage.

In accordance with the ninth aspect of the present invention, each router includes routing protocol-based routing information storages for storing routing information obtained by the routing information computing means or received by the routing information transmitting/ receiving means with respect to each corresponding routing protocol.

In accordance with the tenth aspect of the present invention, the lifetime is set with respect to each corresponding routing protocol.

### EFFECT OF THE INVENTION

As set forth hereinabove, in accordance with the present invention, an active router and standby routers share routing information used for dynamic routing while in normal operation. Further, the active router and the standby routers share routing information obtained after route computation is performed by the routing information computing means. Thus, efficient operation can be achieved.
In addition, since a lifetime is set for routing information received by the routing information transmitting/ receiving means, unnecessary routing information can be prevented from remaining unupdated.

### BEST MODE FOR CARRYING OUT THE INVENTION

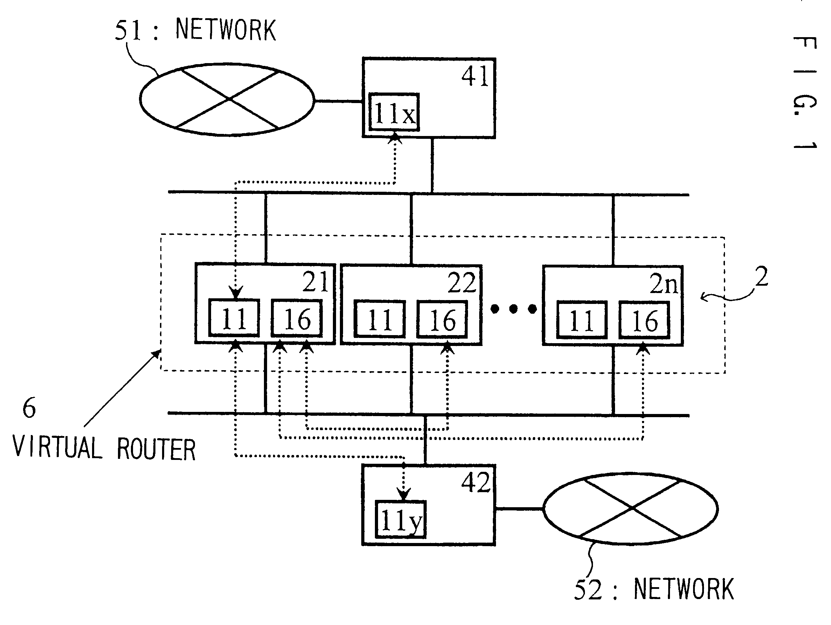

Referring now to the drawings, a description of a router and a network connection system of the present invention will be given in detail.
As can be seen in Fig. 1, the network system of the first embodiment comprises a plurality of routers and two networks (51, 52) connected via the routers. The routers control routes used for communication by dynamic routing. Among the routers, a virtual router 6 has a redundant configuration such that a plurality of routers act as one virtual router.

In other words, as shown in Fig. 1, the network system of the first embodiment comprises a plurality of routers (41, 42, 6) and two networks (51, 52) connected via the routers. The routers control routes used for communication by dynamic routing. One of the routers has a redundant configuration in which a plurality of routers configure one virtual router.

As just described, in this embodiment, a plurality of routers capable of participating in the active/ standby redundant configuration are employed. Only one active router in the routers performs dynamic routing using routing protocols, and transmits routing information obtained by the routing protocol in advance to all standby routers. Thereby, when one of the standby routers becomes active due to a failure that has occurred in the active router, less time is taken to restart routing operation.

Incidentally, "active/ standby redundant configuration" as used herein means that among a plurality of routers in redundant configuration for connecting networks, one router serves as an active router and the others serve as standby routers so that the routers in redundant configuration (the active router and all the standby routers) operate as one virtual router.

In this specification, among a plurality of routers in redundant configuration, the one router being active to perform routing is referred to as an active router, while the routers on standby without performing routing is referred to as standby routers.

Fig. 1 is a block diagram schematically showing the construction of the network system and the exchange of signals therein according to the first embodiment of the present invention. In Fig. 1, connections indicated by dotted arrows represent the exchange of control signals between routers.

As can be seen in Fig. 1, routers 2 (21, 22, ..., 2n) that participate in the redundant configuration each include a dynamic routing controller 11 and a routing information sharing section 16. The routers 2 are of like construction and like reference numerals are utilized in designating corresponding portions of them.

The routers 2 (21, 22, ··· , 2n) has the active/ standby redundant configuration, and are regarded as a single router (virtual router 6) when seen from the outside. A virtual IP address and a virtual MAC address are assigned to the virtual router 6. Packets are sent or forwarded from the outside to the virtual IP address and the virtual MAC address.

While in normal operation, the active router 21 receives packets addressed to the virtual IP address and the virtual MAC address, and forwards (routes) the packets. On the other hand, the standby routers 22 to 2n receive and forward no packet.

In other words, among a group of the routers forming the virtual router 6, only the active router 21 exchanges routing information with the respective routers 41 and 42 for connecting networks by dynamic routing using a prescribed routing protocol.

When a fault has occurred in the active router, one of the other routers forming the virtual router 6 becomes a new active router. After that, the new active router exchanges routing information with the routers 41 and 42 using the prescribed routing protocol.

Incidentally, such switch in the active router as described above will hereinafter referred to as failover.

In the conventional techniques, a router that becomes a new active router immediately after failover has no routing information and cannot perform routing until the exchange of routing information is completed.

Meanwhile, in this embodiment, the active router 21 includes the routing information sharing section 16 for sharing routing information obtained by the dynamic routing controller 11 with the other routers 22 to 2n forming the virtual router 6. The routing information sharing section 16 of the active router 21 forwards routing information obtained by the dynamic routing controller 11 to the standby routers 22 to 2n.

The routing information sharing sections 16 of the respective standby routers 22 to 2n receive routing information sent from the active router 21, and store the routing information in their routing table so as to be able to perform routing even immediately after failover. By virtue of this construction, in accordance with the present invention, a newly selected router can perform routing while exchanging routing information with other routers using a prescribed routing protocol.

In Fig. 1, the state of the network 51 or 52 may have changed. The routers are informed of the change as routing information change through a routing protocol.

Accordingly, routing information shared among the routing information sharing sections 16 needs to be updated by a routing protocol after failover. In addition, it is necessary to remove routing information not updated by a routing protocol within a prescribed period of time.

In this embodiment, a lifetime is set with respect to each routing information shared among the routing information sharing sections 16 to eliminate routing information that has not been updated by a routing protocol for a prescribed period of time after failover.

After failover, a lifetime timer is activated in which a default is set as the lifetime of each routing information. The routing information sharing section 16 removes from the routing table routing information that is not updated by a routing protocol until the lifetime timer indicates 0 (zero) after the failover.

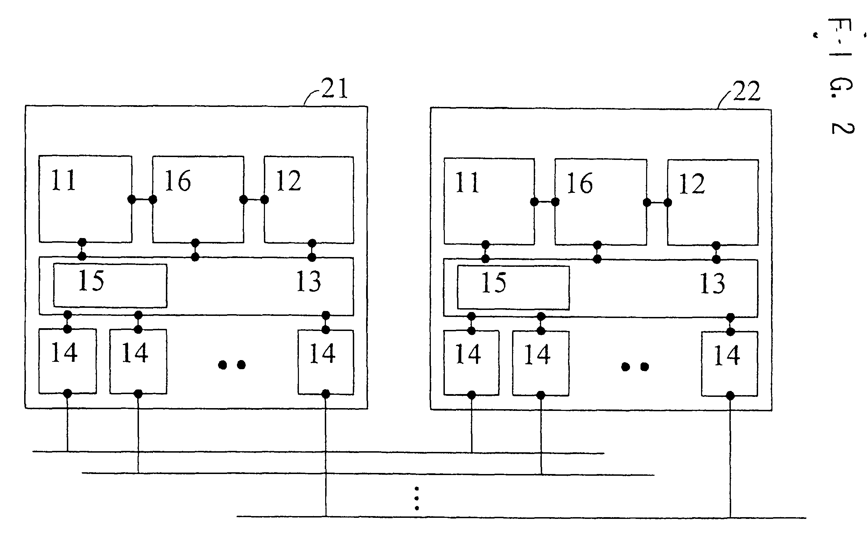

Fig. 2 is a diagram schematically showing the internal construction of the routers 21 and 22 depicted in Fig. 1.
Referring to Fig. 2, the router 21 of this embodiment includes the dynamic routing controller 11 for exchanging routing information with the other routers forming the virtual router 6 using a routing protocol, a redundancy mechanism 12 for realizing the active/standby redundant configuration using a redundancy protocol such as VRRP, a routing section 13 for routing IP packets, network interfaces 14, and the routing information sharing section 16 for sharing routing information with the other routers participating in the redundant configuration. The routing section 13 is provided with a routing table 15.

The routing table 15 contains routing information used for routing by the routing section 13 which is sorted according to destination. That is, the routing table 15 shows information on optimal routes determined by route computation based on corresponding routing protocols, respectively.

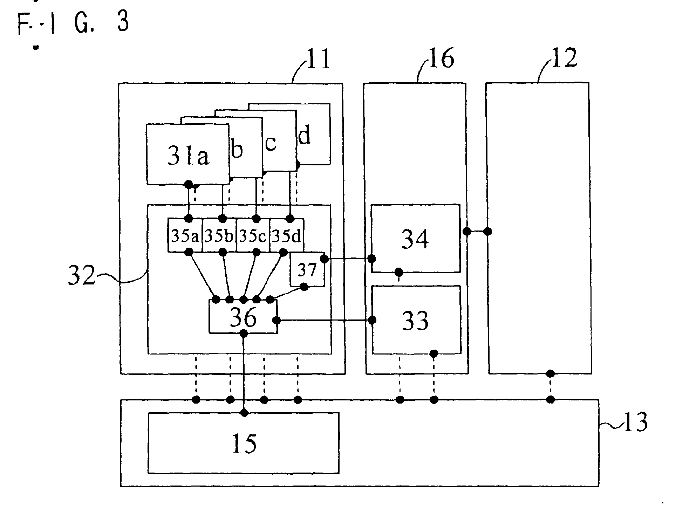

Fig. 3 is a diagram showing in detail part of the internal construction of one of the routers depicted in Fig. 2.

In Fig. 3, connections indicated by dotted lines represent transmission lines for information input via the routing section 13 from the outside, while connections indicated by solid lines represent transmission lines for information to perform control inside the router.

Referring to Fig. 3, the dynamic routing controller 11 includes protocol engines 31a to 31d for performing the process with respect to each type of routing protocol such as RIP, OSPF and BGP4, and a routing integration mechanism 32 for integrating routing information received from the respective protocol engines 31a to 31d to update the routing table 15.

Besides, the routing information sharing section 16 includes a shared routing information transmitter 33 and a shared routing information receiver 34.

The shared routing information transmitter 33 sends each standby router information necessary to share routing information when the router serves as an active router. More specifically, if there is a change in the routing information when the protocol engines 31a to 31d compute routes used for routing with respect to corresponding protocols, respectively, through communication with the routers 41 and 42, the shared routing information transmitter 33 sends each standby router routing information and the like.

The shared routing information receiver 34 receives from the active router information necessary to share routing information when the router serves as an standby router. More specifically, if there is a change in the routing information when the protocol engines of the active router compute routes used for routing with respect to corresponding protocols, respectively, through communication with the routers 41 and 42, the shared routing information receiver 34 receives from the active router routing information and the like.

As just described, the routing information sharing section 16 functions as a routing information transmitter/ receiver for receiving routing information obtained by the protocol engines of the active router when the router serves as a standby router as well as sending the standby routers routing information obtained by the protocol engines 31a to 31d when the router serves as an active router via the routing section 13 and the network interfaces 14.

The routing integration mechanism 32 is provided with tables 35a to 35d for storing routing information received from any one of the protocol engines 31a to 31d, a table 37 for storing routing information received from the shared routing information receiver 34, and a route selecting mechanism 36 for selecting an optimal route with respect to each destination based on routing information stored in the tables.

In the following, a description will be given of the routing and failover operation of the network system of this embodiment.
First, the operation of each portion depicted in Figs. 2 and 3 will be described.
When one of the network interfaces 14 receives packets, the routing section 13 searches for a network interface to which the packets are to be forwarded based on their destination using the routing table 15. Thereby, the packets are transmitted via the corresponding network interface 14 to the destination. Besides, on receipt of packets addressed to the router, the routing section 13 passes the packets via a socket interface to an appropriate mechanism or section (11, 12, 16, etc.).

The dynamic routing controller 11 exchanges routing information with the other routers using a plurality of routing protocols to determine an optimal route based on the routing information. Then, the dynamic routing controller 11 stores the routing information in the routing table 15 of the routing section 13.
As shown in Fig. 3, the dynamic routing controller 11 includes the protocol engines 31 (31a to 31d) for performing the process with respect to each type of routing protocol, and the routing integration mechanism 32 for integrating routing information.

There are provided the protocol engines 31a to 31d for respective routing protocols which the router uses, such as RIP (Routing Information Protocol), OSPF (Open Shortest Path First) and BGP (Border Gateway Protocol) 4. Each of the protocol engines exchanges routing information with the other routers according to procedures determined with respect to each protocol.

All the protocol engines 31 need not operate concurrently. The only required is the operation of the protocol engine 31 corresponding to a routing protocol set to be used in the configuration of the router.

Additionally, the dynamic routing controller 11 retains the state of the router: whether the router operates in active or standby state, and the protocol engines 31 operates only when the router is active. When the state of the router has changed, the redundancy mechanism 12 activates or deactivates the protocol engines 31 depending on the state of the router.

Routing information obtained by the protocol engines 31 is fed to the routing integration mechanism 32 to be stored in one of the tables 35 provided to the respective protocol engines 31. The route selecting mechanism 36 of the routing integration mechanism 32 operates when there is a change in the tables 35 for the respective protocol engines and the table 37 to select an optimal route with respect to each destination based on routing information stored in the tables 35 and 37, thus updating the routing table 15. At the same time, the route selecting mechanism 36 notifies the routing information sharing section 16 of routing update information. For example, when receiving routing information for the same destination from the different protocol engines, the routing integration mechanism 32 refers to the priority set for each protocol engine according to the configuration, and selects a route from the table 35 corresponding to the protocol engine having higher priority.

The redundancy mechanism 12 has a function to communicate via the routing section 13 with the other routers forming the virtual router 6 and ensure that one of the routers forming the virtual router 6 always operates as an active router. The redundancy function provided by the redundancy mechanism 12 is implemented by a known technique.

Having detected that a failure has occurred in the active router, one of the standby routers succeeds to the virtual IP address and the virtual MAC address of the virtual router to start operating as an active router. In addition, the standby router informs the dynamic routing controller 11 and the routing information sharing section 16 of the change in its state. The standby routers can check whether or not the active router is in operation as follows:
(A) All the standby routers send an availability monitor packet to the active router via unicast. On receipt of the availability monitor packet, the active router returns a response to the sender of the packet. The standby router that has received the response can determine that the active router is alive. On the other hand, when receiving no response within a prescribed period of time, the standby router determines that a failure has occurred in the active router.
(B) The active router transmits a notification packet indicating that the router is in operation at intervals of a few seconds by any one of the following methods:
(B-1) Transmit the packet to all the standby routers via unicast;
(B-2) Transmit the packet to all the standby routers via broadcast; and
(B-3) Transmit the packet to a multicast address, to which all the standby routers are listeners, via multicast (this method is applied to VRRP).

Each of the standby routers determines that the active router is alive if it has received the notification packet within a prescribed period of time from when it received the previous one. If not, the standby router determines that a failure has occurred in the active router.

In the following, a description will be given on the assumption that the routers of this embodiment apply method (B-3) above.

A determination can be made as to which one of the routers forming the virtual router is to be activated to operate as an active router as follows:
(C) In the configuration of the routers forming the virtual router, priorities are set for all the routers and an IP address is assigned to each of them. Each router operates as an active router when all the higher-priority routers are at fault.
(D) In the configuration of each router forming the virtual router, priority is set only for the router. The router receives a notification packet from the active router, and checks whether or not the active router has priority higher than its own priority. If the active router has priority higher than that of the router, the router operates as a standby router. If not, or no notification packet is transmitted, the router initiates transmitting the notification packet to operate as an active router. This method is available only in combination with availability monitoring method (B) above.

In the following, a description will be given on the assumption that the routers of this embodiment apply method (D) above.

The routing information sharing section 16 has a function to uniform the contents of the routing tables of all the routers forming the virtual router 6 using routing update information received from the dynamic routing controller 11.

The function implemented by the routing information sharing section 16 is newly suggested by the present invention. With reference to Fig. 3, the routing information sharing section 16 includes the shared routing information transmitter 33 and the shared routing information receiver 34. The routing information sharing section 16 retains the state of the router: whether the router operates in active or standby state. The shared routing information transmitter 33 operates only when the router is active, while the shared routing information receiver 34 operates only when the router is on standby.

Having received routing update information from the dynamic routing controller 11, the shared routing information transmitter 33 transmits the information by any one of the following methods:
(E) In the configuration of the routers forming the virtual router, priorities are set for all the routers and an IP address is assigned to each of them. While in operation, the active router transmits routing update information to the lower-priority routers.
(F) The same multicast address is set as the destination of routing update information for the respective routers. The active router transmits routing update information to the multicast address.

In the following, a description will be given on the assumption that the routers of this embodiment apply method (F) above.
Routing information as used herein represents a combination of a destination network address, a mask length and a next-hop address. Besides, routing update information as used herein includes routing information and also information as to whether the routing information has been added or removed.

The shared routing information receiver 34 of each standby routers receive routing update information transmitted from the active router. The routing update information obtained by the shared routing information receiver 34 is fed to the routing integration mechanism 32 of the dynamic routing controller 11 to be stored in the table 37.

When the router serves as an standby router, the protocol engines 31 of the dynamic routing controller 11 is inactive. Accordingly, routing information received from the shared routing information transmitter is directly set in the routing table as the result of integration.

Packets to be forwarded by the virtual router 6 are sent to the virtual IP address and the virtual MAC address of the router. Since the active router 21 receives those packets to forward them, the standby router 22 neither receives nor forwards the packets even if having routing information in the routing table. When informed by the redundancy mechanism 12 that the router has switched from standby to active state, the shared routing information receiver 34 terminates its receiving operation, and activates the lifetime timer. The value of the lifetime timer is set according to the configuration.

When the lifetime timer indicates 0 (zero), the shared routing information receiver 34 removes all routing information from the table 37 of the routing integration mechanism 32.

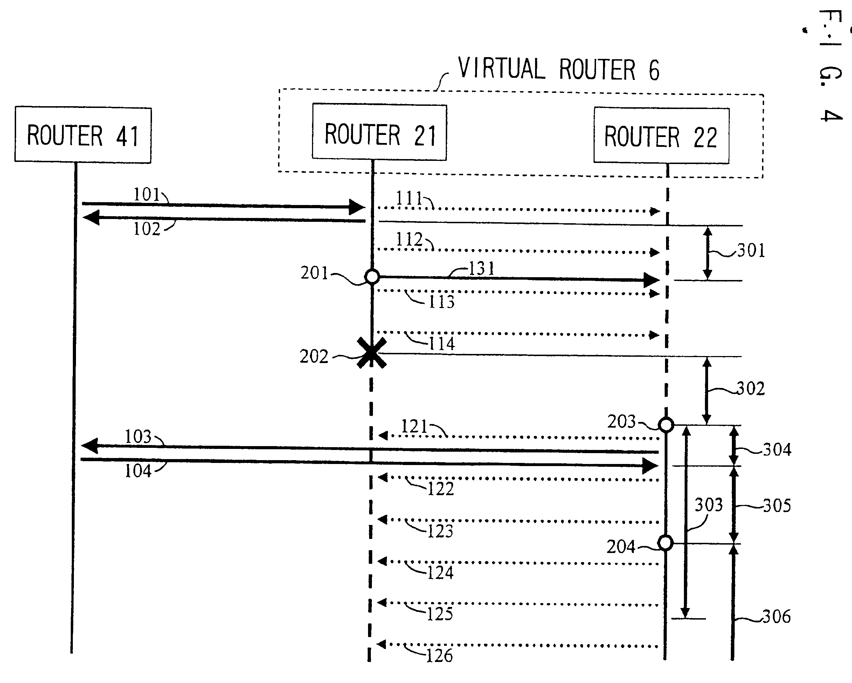

Fig. 4 is a sequence chart showing the exchange of signals in the case where the standby router 22 takes over the operation of the active router 21 due to a failure that has occurred in the router 21.

In Fig. 4, signals indicated by dotted arrows 111 to 114 and 121 to 126 represent notification packets transmitted regularly from the active router to the standby router.

While in normal operation, the redundancy mechanism of the active router 21 transmits notification packets (111 to 114) indicating that the router is in operation at regular intervals.

When routing information has changed as for example when the state of a network has changed, the exchange of the routing information (101 to 102) is performed through a routing protocol.

In Fig. 4, although the router 41 informs the active router 21 of a change in routing information, the router 21 may inform the router 41 of such a change. When routing information has been updated by a routing protocol, the route selecting mechanism 36 depicted in Fig. 3 computes an optimal route (301).

The route selecting mechanism 36 notifies the shared routing information transmitter 33 of routing update information. The shared routing information transmitter 33 sends the routing update information 131 to the standby router 22 (201). Having received the routing update information 131, the standby router 22 updates its routing table.

At this point, if a failure 202 occurs in the active router 21, the standby router 22 switches to an active router (203) after confirming that the router 21 has transmitted no notification packet for a prescribed period of time (302).

Thereafter, the router 22 transmits notification packets (121 to 126) to indicate that it is serving as an active router. As soon as the router 22 is activated, it carries out the exchange of routing information (103, 104) with the other router using a routing protocol.

After the exchange of routing information, the route selecting mechanism computes an optimal route, and then the router 22 updates routing information (204). During the period (304 + 305) from when the router 22 switches to an active router to when the routing table is updated (204) according to the routing update by the routing protocol, the router 22 performs routing with the use of routing information previously obtained by the routing information sharing section 16. After that (306), the router 22 performs routing based on the routing information updated by the routing protocol.

After a period of time (303) set as lifetime has elapsed from when the router 22 switches to an active router (203), as is described above, the routing information previously obtained by the routing information sharing section 16 is entirely removed from the table 37 of the routing integration mechanism 32 depicted in Fig. 3.

In the network system according to the first embodiment of the present invention, a plurality of routers participates in the active/standby redundant configuration to form one virtual router, and only one active router of the routers performs dynamic routing using routing protocols. The active router transmits updated routing information to the standby routers. Thus, it is possible to uniform the contents of the routing tables of the respective routers forming the virtual router.

In the conventional techniques, when a standby router becomes active at the point of failure, the new active router cannot carry out communications through the routes while updating routing information by a routing protocol. On the other hand, according to the first embodiment of the present invention, communication can be continued even immediately after failover. Moreover, the new active router takes over routing information for dynamic routing concurrently with failover, thereby following changes in the state of networks.

Further, a lifetime is set for routing information received by the routing information sharing section 16. Consequently, unnecessary routing information, as for example information on a route which no longer exists and is not overwritten with new routing information, does not remain unupdated. Thus, it is possible to prevent adverse effects on the selection of an optimal route by the routing integration mechanism 32.

As set forth hereinabove, in accordance with the first embodiment of the present invention, an active router shares routing information collected in dynamic routing with standby routers beforehand. Therefore, routing can be performed with substantially no interruption in communication even while the routing information is being updated.

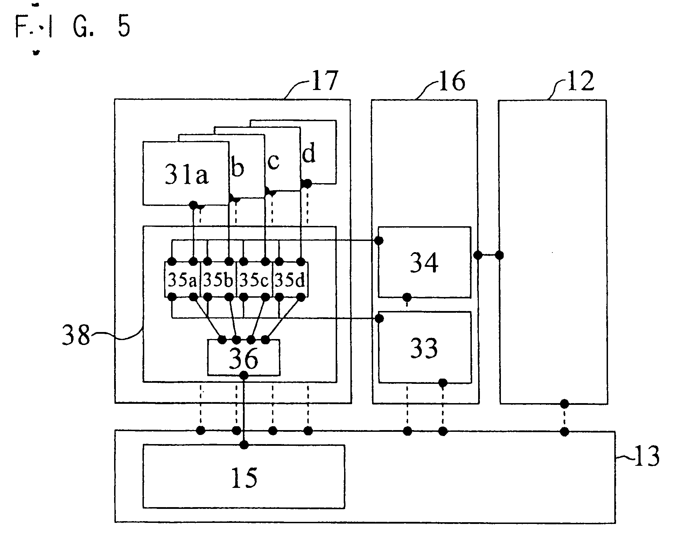

Referring now to Fig. 5, a description will be given of a network system according to the second embodiment of the present invention.

In the first embodiment described above, the shared routing information transmitter 33 receives routing update information for transmission from the route selecting mechanism 36. In the second embodiment, however, the shared routing information transmitter 33 receives routing update information from the tables 35a to 35d each corresponding to one of the protocol engines differently from the first embodiment.

Besides, in the first embodiment described above, routing update information received by the shared routing information receiver 34 is stored in the dedicated table 37. In the second embodiment, however, routing update information is directly stored in the tables 35a to 35d each corresponding to one of the protocol engines differently from the first embodiment.

In this embodiment, the shared routing information transmitter 33 of the active router sends the standby routers routing update information including the type of the protocol engine from which the update information has been obtained. The shared routing information receiver 34 of each standby router receives the routing update information sent from the active router.

The shared routing information receiver 34 stores the routing update information in one of the tables 35a to 35d corresponding to the type of the protocol engine. On this occasion, the route selecting mechanism 36 of a routing information integration mechanism 38 selects an optimal route with respect to each destination based on routing information stored in the tables 35a to 35d, thus updating the routing table 15.

When informed by the redundancy mechanism 12 that the router has switched from standby to active state, the shared routing information receiver 34 terminates its receiving operation, and activates the lifetime timer.

In this embodiment, each of the protocol engines is provided with a lifetime timer, and therefore, different lifetimes can be set in the respective protocol engines. The value of the lifetime timer of each protocol engine is set according to the configuration. When the lifetime timer of one protocol engine indicates 0 (zero), the shared routing information receiver 34 removes all routes or routing information from the corresponding table 35, which the receiver 34 has stored therein.

In accordance with the second embodiment of the present invention, routing update information is managed together with the type of the protocol engine from which the update information has been obtained. Thereby, different lifetimes can be set in the respective protocol engines. That is, the network system of the second embodiment enables, in addition to the effects achieved in the first embodiment described above, more detailed settings as compared to those of the first embodiment.

### BRIEF DESCRIPTION OF THE DRAWINGS

Fig. 1 is a block diagram schematically showing the construction of a network system and the exchange of signals therein according to the first embodiment of the present invention.
Fig. 2 is a diagram schematically showing the internal construction of routers 21 and 22 depicted in Fig. 1.
Fig. 3 is a diagram showing in detail part of the internal construction of one of the routers depicted in Fig. 2.
Fig. 4 is a sequence chart showing the exchange of signals in the case where a standby router 22 takes over the operation of an active router 21 due to a failure that has occurred in the router 21.
Fig. 5 is a diagram showing in detail part of the internal construction of a router in a network system according to the second embodiment of the present invention.

### DESCRIPTION OF CODES

11, 17 Dynamic routing controller
12 Redundancy mechanism
13 Routing section
14 Network interface
15 Routing table
16 Routing information sharing section (Routing information transmitter/ receiver)
2 Router (Routers forming a virtual router)
31 (31a to 31d) Protocol engine
32 Routing integration mechanism (Routing table updating means)
33 Shared routing information transmitter
34 Shared routing information receiver
35 (35a to 35d) Table (Computed routing information storage or Routing protocol-based routing information storage)
36 Route selecting mechanism
37 Table (Received routing information storage)
41, 42 Routers (Adjacent routers)
51, 52 Networks (Terminals connected to the networks)
6 Virtual router

## Claims

1. A router for constituting one virtual router, the virtual router being constituted of an active router and standby routers to connect a plurality of networks by dynamic routing through communication with adjacent routers, the router comprising:
a routing information computing means for communicating with other routers to compute a route used for routing with respect to each corresponding routing protocol when the router serves as an active router;
a routing information transmitting/ receiving means for receiving routing information obtained by the routing information computing means of an active router when the router serves as a standby router, and transmitting routing information obtained by the routing information computing means of the router to standby routers when the router serves as an active router; and
a routing table updating means for, when routing information used for routing has changed, updating a routing table containing the routing information for performing dynamic routing by selecting an optimal route with respect to each destination based on routing information obtained by the routing information computing means or received by the routing information transmitting/ receiving means.

2. A router according to claim 1, wherein a lifetime is set for routing information received by the routing information transmitting/ receiving means when the router serves as a standby router, and the routing information is deleted after the lifetime has elapsed from when the router started operating as an active router.

3. A router according to claim 1 or 2, wherein:
the routing table updating means includes:
a computed routing information storage for storing routing information obtained by the routing information computing means when the router serves as an active router; and
a received routing information storage for storing routing information received by the routing information transmitting/ receiving means when the router serves as a standby router; and
the routing table updating means updates the routing table by selecting an optimal route with respect to each destination based on routing information stored in the computed routing information storage or the received routing information storage.

4. A router according to claim 1 or 2, including routing protocol-based routing information storages for storing routing information obtained by the routing information computing means or received by the routing information transmitting/ receiving means with respect to each corresponding routing protocol.

5. A router according to claim 4, wherein the lifetime is set with respect to each corresponding routing protocol.

6. A network connection system, in which one virtual router is constituted of an active router and standby routers to connect a plurality of networks by dynamic routing through communication with adjacent routers, each router that constitutes the virtual router comprising:
a routing information computing means for communicating with other routers to compute a route used for routing with respect to each corresponding routing protocol when the router serves as an active router;
a routing information transmitting/ receiving means for receiving routing information obtained by the routing information computing means of an active router when the router serves as a standby router, and transmitting routing information obtained by the routing information computing means of the router to standby routers when the router serves as an active router; and
a routing table updating means for, when routing information used for routing has changed, updating a routing table containing the routing information for performing dynamic routing by selecting an optimal route with respect to each destination based on routing information obtained by the routing information computing means or received by the routing information transmitting/ receiving means.

7. A network connection system according to claim 6, wherein, in the router, a lifetime is set for routing information received by the routing information transmitting/ receiving means when the router serves as a standby router, and the routing information is deleted after the lifetime has elapsed from when the router started operating as an active router.

8. A network connection system according to claim 6 or 7, wherein, in the router:
the routing table updating means includes:
a computed routing information storage for storing routing information obtained by the routing information computing means when the router serves as an active router; and
a received routing information storage for storing routing information received by the routing information transmitting/ receiving means when the router serves as a standby router; and
the routing table updating means updates the routing table by selecting an optimal route with respect to each destination based on routing information stored in the computed routing information storage or the received routing information storage.

9. A network connection system according to claim 6 or 7, wherein each router includes routing protocol-based routing information storages for storing routing information obtained by the routing information computing means or received by the routing information transmitting/ receiving means with respect to each corresponding routing protocol.

10. A network connection system according to claim 9, wherein the lifetime is set with respect to each corresponding routing protocol.
